# EUROPÄISCHE PATENTANMELDUNG

(11) **EP 4 534 778 A1**
(43) Veröffentlichungstag der Anmeldung: **09.04.2025**
(21) Anmeldenummer: 24204570.6
(22) Anmeldetag: 04.10.2024
(51) Int. Cl.: E04G 21/32, B60P 7/08

(54) **VORRICHTUNG ZUR HÖHENSICHERUNG**

(30) Priorität: 05.10.2023 DE 102023004003
(71) Anmelder: Span Set Gesellschaft für Transportsysteme und technische Bänder mit beschränkter Haftung & Co. Kommanditgesellschaft, 52531 Übach-Palenberg (DE)
(72) Erfinder: Schmitz, Ralf, 52477 Alsdorf (DE)
(74) Vertreter: Taubert, Diana

(57) **Zusammenfassung**

Die Erfindung betrifft eine Vorrichtung zur Höhensicherung und einer Spannvorrichtung für selbige. Die Vorrichtung zur Höhensicherung besteht aus mindestens einem vertikalen Stützelement, mindestens einem textilen, biegeschlaffen Anschlagmittel, das an dem mindestens einen vertikalen Stützelement im Funktionszustand angeordnet ist, mindestens einem Anschlagpunkt, der im Funktionszustand an eine Körperstruktur angeordnet ist oder mindestens einem weiteren vertikalen Stützelement, wobei das mindestens eine textile biegeschlaffe Anschlagmittel an dem mindestens einen Anschlagpunkt oder an dem mindestens einen weiteren vertikalen Stützelement im Funktionszustand angeordnet ist, der Spannvorrichtung , die mit dem mindestens einen textilen, biegeschlaffen Anschlagmittel im Funktionszustand in Wirkverbindung steht und zum Spannen des mindestens einen biegeschlaffen Anschlagmittels dient, wobei die Spannvorrichtung an dem mindestens einen vertikalen Stützelement und/oder dem mindestens einen weiteren vertikalen Stützelement und/oder dem mindestens einen Anschlagpunkt beweglich angeordnet ist.

## Beschreibung

Die Erfindung betrifft eine Vorrichtung zur Höhensicherung, im Wesentlichen bestehend aus vertikalen Stützelementen, horizontal an den Stützelementen anordenbaren mindestens einem textilen, biegeschlaffen Anschlagmittel, Anschlagpunkten zur Anordnung an eine Körperstruktur zur funktionssicheren Anordnung des mindestens einen Anschlagmittels an die Körperstruktur und einer Spannvorrichtung zum funktionssicheren Spannen des mindestens einen Anschlagmittels. Dabei sind an freien Enden des mindestens einen textilen, biegeschlaffen Anschlagmittels und/oder an einem freien Ende der Spannvorrichtung Anschlagelemente, so Hakenelemente, vorgesehen, die mit Anschlagpunkten einer Körperstruktur oder vertikalen Stützelementen in Wirkverbindung bringbar sind. Des Weiteren kann in Wirkverbindung mit dem mindestens einen textilen, biegeschlaffen Anschlagmittel eine Vorspannkraftmessvorrichtung, ein sogenannter TFI, angeordnet sein, der eine Vorspannkraft anzeigt.

Vorbeschriebene Höhensicherungen sind bereits bekannt und werden mit besonderen Spannenelementen, die zur Spannung der textilen biegeschlaffen Anschlagmittel dienen, eingesetzt. Ein solches Spannelement ist beispielhaft aus der EP 0 736 698 A1 bekannt.

Derartige Spannelemente sind relativ aufwändig konstruiert und weisen beispielhaft einen Doppelschieber mit Hebelwirkung eines Spannhebels auf. Darüber hinaus kommen bei einer solchen Spannvorrichtung gehärtete Zahnkränze zum Einsatz, wobei die Fertigung relativ kostenintensiv ist.

Ferner hatte sich in der Vergangenheit herausgestellt, dass bei den vorbekannten Systemen zur Höhensicherung die textilen, biegeschlaffen Anschlagmittel in Form von horizontal anordenbaren Gurtbändern ein definiertes Dehnungsvermögen aufweisen und wasserabweisend ausgestaltet sein müssen. Durch die wasserabweisende Ausgestaltung sind die innerhalb der Vorrichtung zum Einsatz kommenden Anschlagmittel mit einer Beschichtung versehen. Dadurch verringert sich die Flexibilität dieser Anschlagmittel. Die Steifigkeit nimmt zu.

Bei dem Einsatz von biegeschlaffen textilen Anschlagmitteln, wie Seilen oder Gurtbändern, welche ein definiertes Dehnungsvermögen besitzen und wasserabweisend ausgestaltet sind, sind daher an eine Spannvorrichtung besondere Anforderungen zu stellen.

Besonders konstruierte Spannvorrichtungen, wie vorab beschrieben, sind dafür zwar geeignet, aber in der Konstruktion relativ aufwändig und wegen der notwendigen gehärteten Zahnkränze relativ teuer in der Fertigung.

Um eine Betriebssicherheit der Anschlagmittel gewährleisten zu können, bedarf es der Einhaltung einer definierten Vorspannung, die bei bekannten handbetriebenen Spannratschen vom Anwender nicht immer, zumindest aber nicht immer bei der bisherigen Anordnung dieser Spannratschen, sichergestellt wird, weil die Handhabe der Spannratschen im Zusammenwirken mit den biegeschlaffen Anschlagmitteln zu beiden freien Enden der Spannratschen für eine Person oftmals schwierig ist. Zudem gestaltet sich der Spannvorgang bei den beschichteten, gegebenenfalls auch verstärkten und weniger flexiblen Anschlagmitteln, wie beispielhaft Seilen oder Gurtbändern, schwieriger als bei Unbeschichteten. Es muss eine größere Kraft aufgebracht werden, um das steifere textile, biegeschlaffe Anschlagmittel zu spannen.

Die Erfindung hat die Aufgabe, eine Vorrichtung zur Höhensicherung und eine Spannvorrichtung für diese weiterzubilden und dabei zu optimieren, so die Handhabe zu verbessern.

Diese Aufgabe wird erfindungsgemäß durch eine Vorrichtung zur Höhensicherung mit den Merkmalen des Hauptanspruchs 1 und einer Spannvorrichtung für diese mit den Merkmalen des Nebenanspruchs 13 gelöst, wobei die Unteransprüche weitere erfindungsgemäße Ausgestaltungsvarianten dieser Lösungen beinhalten.

Die Vorrichtung zur Höhensicherung, die auch als System zur Höhensicherung beschrieben werden kann, setzt sich aus verschiedenen bekannten Komponenten, somit aus verschiedenen separaten Bauteilen, zusammen, die beispielhaft auf einer Baustelle oder einem anderen Ort, der einer Höhensicherung bedarf, zu der fertigen Vorrichtung montiert werden.

Die Vorrichtung besteht danach erstens aus mindestens einem vertikalen Stützelement, zweitens mindestens einem textilen, biegeschlaffen Anschlagmittel, das an dem mindestens einen Stützelement im Funktionszustand angeordnet ist und drittens mindestens einem Anschlagpunkt zur Anordnung an eine Körperstruktur, der Anschlagpunkt im Funktionszustand der Vorrichtung an der Körperstruktur angeordnet ist oder mindestens einem weiteren vertikalen Stützelement, wobei das bereits erwähnte mindestens eine textile biegeschlaffe Anschlagmittel an dem mindestens einen Anschlagpunkt zur funktionssicheren Anordnung an die Körperstruktur oder zur Anordnung an dem mindestens einen weiteren vertikalen Stützelement im Funktionszustand angeordnet ist.

Funktionszustand im Sinne der Erfindung ist der Zustand, bei dem die Vorrichtung einsatzfähig montiert ist und zur Höhensicherung dient.

Körperstruktur im Sinne der Erfindung ist beispielhaft ein Gebäude und deren Teile, eine Naturstruktur wie Fels oder ähnliches. Es kann auch ein sonstiges körperliches Gebilde sein.

Der mindestens eine Anschlagpunkt ist im Funktionszustand der Vorrichtung in bekannter Art und Weise an die Körperstruktur angeordnet, so beispielhaft mittels Anschlusselementen, wie Klemmen oder Schrauben. Die vorgenannten Bauteile bilden so eine Art Geländer.

Das mindestens eine vertikale Stützelement und das mindestens eine weitere vertikale Stützelement sind im funktionsfähigen Zustand der Vorrichtung ebenfalls in bekannter Weise an der Körperstruktur angeordnet. Sie verfügen ferner fakultativ in bekannter Ausgestaltung über eine Basis zur Anordnung auf eine Oberfläche der Körperstruktur. Auch können sie jeweils mindestens eine Bandführung zur Aufnahme des mindestens einen biegeschlaffen Anschlagmittels besitzen, was aber nicht Gegenstand der Erfindung ist.

Ferner weist die Vorrichtung eine Spannvorrichtung auf, die mit dem mindestens einen textilen, biegeschlaffen Anschlagmittel im Funktionszustand in Wirkverbindung steht und zum funktionssicheren Spannen des mindestens einen biegeschlaffen Anschlagmittels dient.

Erfindungsgemäß ist dabei die Spannvorrichtung an dem mindestens einen vertikalen Stützelement und/oder dem mindestens einen weiteren vertikalen Stützelement und/oder dem mindestens einen Anschlagpunkt beweglich angeordnet. Die Anordnung ist somit flexibel festlegbar, gerade, wenn bei dem Einsatz mehrerer biegeschlaffer Anschlagmittel mehrere Spannvorrichtungen zum Einsatz kommen. Die Anordnung ist im Rahmen der Erfindung auch reversibel, sodass die Spannvorrichtung leicht gewechselt oder separat transportiert werden kann, wenn die Vorrichtung zur Höhensicherung demontiert ist.

Dabei kann die Spannvorrichtung mittels einer Gelenkverbindung an dem mindestens einen vertikalen Stützelement und/oder dem mindestens einen weiteren vertikalen Stützelement und/oder dem mindestens einen Anschlagpunkt beweglich und reversibel angeordnet sein. Es kommen alle bekannten und geeigneten Arten von Gelenkverbindungen in Betracht.

Die Gelenkverbindung kann dabei beispielhaft als ein Bügel ausgestalt sein, der drehbar an der Spannvorrichtung angeordnet ist und eine X-Achse der Gelenkverbindung bildet. Ferner weist der Bügel eine Aufnahme auf, die winklig, vorzugsweise rechtwinklig zur X-Achse an dem mindestens einen vertikalen Stützelement und/oder dem mindestens einen weiteren Stützelement und/oder dem mindestens einen Anschlagpunkt drehbar angeordnet ist und eine Y-Achse der Gelenkverbindung bildet.

Als Spannvorrichtung kommt jede für biegeschlaffe Anschlagmittel geeignete Vorrichtung in Betracht, so bekannte Ratschen.

Durch die vorbeschriebene Anordnung der Spannvorrichtung wird bereits eine verbesserte Höhensicherung bereitgestellt. Der Spannvorgang kann durch die neue Anordnung der Spannvorrichtung in der Handhabe einfacher erfolgen, weil die Spannratsche bereits an einem Ende festgelegt ist.

Im Rahmen der Erfindung hat sich ferner gezeigt, dass eine für die Vorrichtung zur Höhensicherung einsetzbare Spannvorrichtung weitere Vorteile aufweist, die eine besondere konstruktive Ausgestaltung besitzt.

In weiterer Ausgestaltung der Erfindung besitzt diese Spannvorrichtung ein Grundgestell mit einer darin drehbar gelagerten Aufwickelwelle, auf die das mindestens eine Anschlagmittel aufwickelbar ist, wobei die Aufwickelwelle ein Fixierungselement zur Arretierung eines freien Endes des mindestens einen Anschlagmittels aufweist, zum Beispiel einen Aufnahmeschlitz. Ebenfalls besitzt die Spannvorrichtung ein Schneckenrad, dessen Drehachse die Aufwickelwelle ist und das, vorzugsweise aber nicht erfindungsnotwendig, seitlich an der Aufwickelwelle angeordnet ist sowie eine ebenfalls im Grundgestell drehbar gelagerte Antriebswelle, welche eine Schnecke aufweist, die sich wiederum in Eingriff mit dem Schneckenrad befindet.

Des Weiteren weist mindestens ein freies Ende der Antriebswelle ein Anschlussstück auf. Das Anschlussstück kann vorzugsweise, aber nicht erfindungsnotwendig an zwei freien Enden der Antriebswelle vorgesehen sein, was eine verbesserte Handhabe der Spannvorrichtung von unterschiedlichen Seiten gewährleistet.

Das Anschlussstück ist dabei als ein Formteil ausgestaltet, das es ermöglicht, die Antriebswelle über das Anschlussstück, das in Formschluss mit einem Gegenstück bringbar ist, über eine Antriebseinheit, beispielhaft eine Bohrmaschine, anzutreiben, um so einen Spannvorgang des mindestens einen biegeschlaffen Anschlagmittels durchzuführen.

Auch hierdurch ist eine weiter optimierte Handhabe der Vorrichtung zur Höhensicherung gegeben. Durch die neue Gestaltung der Spannvorrichtung mittels des Schneckengetriebes kann der Spannvorgang feiner erfolgen als bei bekannten Ratschen. Ein Aufbringen und ein Nachjustieren der Vorspannkraft sind punktgenau möglich. Durch die Ausgestaltung des Anschlussstücks als Formteil und des formschlüssigen Zusammenwirkens mit dem Gegenstück wird bereits gewährleistet, dass nur Inhaber des Gegenstücks die Spannvorrichtung bedienen können. Schon dies gewährt eine verbesserte Sicherheit gegenüber der Verwendung einer Handkurbel, die an der Antriebswelle angeordnet ist oder eines in die Spannvorrichtung integrierten Elektromotors zum Antrieb der Antriebswelle. Das Gegenstück wird üblicherweise in einer Handbohrmaschine oder einen Akkuschrauber eingespannt, wodurch die Spannvorrichtung in ihrer besonderen Ausgestaltung besonders kräfteschonend und damit anwenderfreundlich bedient werden kann. Weiter kann vorgesehen werden, dass das Anschlussstück als Formteil mindestens ein Sicherheitsmerkmal aufweist, in das lediglich ein passendes Gegenstück in Wirkverbindung bringbar ist.

Als Sicherheitsmerkmal kommen spezielle Formteile und Konstruktionen, wie beispielhaft Felgenschlösser bei Autofelgen oder Sicherheitsschauben bei Achsen von Fahrrädern in Betracht.

Kostengünstiger ist jedoch die Verwendung drei- oder mehrkantartiger Formteile, die nicht mit einem üblichen Schraubenschlüssel formschlüssig zusammenwirken können.

Durch diese Ausgestaltung kann vorteilhafterweise der Kreis der zur Handhabe Berechtigten begrenzt werden, wenn beispielsweise nur berechtigte Personen über ein passendes Gegenstück zu dem Formteil, vorzugsweise mit einem Sicherheitsmerkmal, verfügen. Das Risiko einer nicht autorisierten Verringerung der Vorspannkraft wird reduziert.

Ferner kann das Anschlussstück und/oder die Antriebswelle eine Sollbruchstelle aufweisen, um eine Überlastung der funktionsgemäßen Gurtspannung zu verhindern. Eine weitere Ausgestaltung der Spannvorrichtung kann vorsehen, dass das Anschlussstück und/oder die Antriebswelle ein Kardangelenk aufweisen. Dies gewährt eine verbesserte Anordnung der Antriebseinheit, so einer Bohrmaschine an das Anschlussstück.

Ebenfalls kommt alternativ zur vorerwähnten Sollbruchstelle in Betracht, dass das Anschlussstück und/oder die Antriebswelle eine Rutschkupplung aufweisen, die eine Überlastung der Spannvorrichtung beim Spannen verhindern.

Ergänzend kann die Vorrichtung zur Höhensicherung weitere Bauteile aufweisen, welche das System ergänzen. So kann vorgesehen sein, dass die Vorrichtung zur Höhensicherung eine Anzeige der Vorspannkraft aufweist, die beispielhaft an dem mindestens einen biegeschlaffen Anschlagmittel an der Spannvorrichtung und/oder an der Gelenkverbindung der Spannvorrichtung angeordnet ist. Dadurch ist es möglich, dass beim Aufbringen der Vorspannkraft mittels der Spannvorrichtung die Anzeige im Blickfeld der Person liegt, welche den Spannvorgang ausführt.

Es kann vorgesehen werden, dass die Anzeige der Vorspannkraft Teil der Gelenkverbindung ist, bolzenartig ausgebildet ist und so eine Drehachse der Gelenkverbindung selbst bildet.

So kann die Anzeige der Vorspannkraft in die Gelenkverbindung zwischen der Spannvorrichtung und dem mindestens einen vertikalen Stützelement und/oder dem mindestens einen weiteren vertikalen Stützelement und/oder dem mindestens einen Anschlagpunkt integriert werden. Dabei ist die Anzeige der Vorspannkraft so ausgebildet, dass eine Ausnehmung, so zum Beispiel ein Schlitz, rechtwinklig zur Richtung der Vorspannkraft vorgesehen ist, die Ausnehmung sich während des Spannvorgangs verringert, maximal bis 0, bis diese nicht mehr vorhanden ist. Die Anzeige ist ein- oder mehrstückig aus einem Kunststoff, aus Metall oder einem anderen geeigneten Material, wie beispielhaft einem Kompositwerkstoff, gefertigt. Sie ist so preisgünstig herstellbar und einfach aufgebaut. Die Ausnehmung ist in Längsrichtung angeordnet und erstreckt sich somit axial. Sie ist an einer oder an zwei Stirnseiten der Anzeige der Vorspannkraft sichtbar, damit die Anzeige für den Verwender optisch gut wahrnehmbar ist.

In vorteilhafter Ausgestaltung weist das mindestens eine biegeschlaffe Anschlagmittel in Form eines Gurtbandes eine wasserabweisende Beschichtung auf. Darüber hinaus weist das mindestens eine biegeschlaffe Anschlagmittel ein definiertes Dehnvermögen kleiner als 4% auf. Das Dehnverhalten muss deswegen derart gering sein, um eine durch Sicherheitsnormen definierte Auslenkung des vorgespannten mindestens einen biegeschlaffen Anschlagmittels nicht zu überschreiten.

Gerade auch aufgrund der durch Sicherheitsnormen vorgegebenen definierten Auslenkung ist es durch die erfindungsgemäße Lösung und die erfindungsgemäße Spannvorrichtung möglich, punktgenau eine notwendige durch die Sicherheitsnormen definierte Vorspannung einzustellen.

Die im Rahmen der erfinderischen Ausgestaltung der Vorrichtung hervorgebrachten Vorteile lassen sich wie folgt zusammenfassen. Durch die erfindungsgemäße Vorrichtung wird eine verbesserte Höhensicherung bereitgestellt, die eine optimierte Handhabe und optimierte Einstellung der Vorspannung des mindestens einen Anschlagmittels gewährleistet und den Spannvorgang des mindestens einen Anschlagmittels erleichtert. Darüber hinaus kann die Fertigung der Spannvorrichtung selbst kostengünstiger erfolgen, ohne dass gehärtete Zahnkränze oder eine aufwändige Mechanik bei der Spannvorrichtung zum Einsatz kommen, wie dies bei Spannratschen der Fall ist. Der Spannvorgang kann durch die neue Anordnung der Spannvorrichtung in der Handhabe einfacher erfolgen, weil die Spannvorrichtung bereits an einem Ende festgelegt ist. Durch ihre neue Gestaltung der Spannvorrichtung kann der Spannvorgang genauer erfolgen. Ein Nachjustieren der Vorspannkraft ist darüber hinaus ebenso punktgenau möglich. Mittels des Formteils und speziell des Sicherheitsmerkmals kann dabei vorteilhafterweise der Kreis der zur Handhabe Berechtigten begrenzt werden, wenn beispielsweise nur berechtigte Personen über ein passendes Gegenstück zu dem Formteil, vorzugsweise mit einem Sicherheitsmerkmal, verfügen. Das Risiko eines nicht autorisierten Verringerns der Vorspannkraft wird verringert. Die Handhabe ist zudem einfacher, weil der Spannvorgang, wie bereits erläutert, nicht mehr mit der Hand, sondern mithilfe von mechanischen Geräten, wie einer Bohrmaschine oder einem Akkuschrauber, erfolgen kann.

Die bewegliche Anordnung der Spannvorrichtung an dem mindestens einen vertikalen Stützelement und/oder dem mindestens einen weiteren vertikalen Stützelement und/oder dem mindestens einen Anschlagpunkt gewährleistet, wie gesagt, eine verbesserte Handhabe der Vorrichtung. Dabei ist zu erwähnen, dass das mindestens eine vertikale Stützelement oder das mindestens eine weitere vertikale Stützelement im Rahmen der Handhabe bereits funktionssicher montiert ist, sodass die bewegliche Anordnung der Spannvorrichtung an dieses eine wesentliche Vereinfachung der Handhabe gewährleistet, weil bereits ein freies Ende der Spannvorrichtung festgelegt ist, bevor der Spannvorgang erfolgt.

Die Erfindung wird nachfolgend anhand eines Ausführungsbeispiels unter Bezugnahme auf die Figuren weiter erläutert. Dabei ergeben sich weitere Vorteile, Merkmale und Ausgestaltungen der Erfindung.

Es zeigen:
**Fig. 1** eine schematische Darstellung der Vorrichtung mit einem vertikalen Stützelement mit jeweils drei an ihm angeordneten erfindungsgemäßen Spannvorrichtungen jeweils mit biegeschlaffen Anschlagmitteln,
**Fig. 2** eine schematische Darstellung der Vorrichtung mit einem vertikalen Stützelement mit jeweils drei an ihm angeordneten erfindungsgemäßen Spannvorrichtungen jeweils mit biegeschlaffen Anschlagmitteln, die wiederum an zwei weiteren vertikalen Stützelementen angeordnet sind,
**Fig. 3** eine schematische Darstellung einer erfindungsgemäßen Spannvorrichtung in Schrägperspektive,
**Fig. 4** eine schematische Darstellung einer erfindungsgemäßen Spannvorrichtung in Draufsicht.
**Fig. 5** eine schematische Darstellung einer erfindungsgemäßen Spannvorrichtung mit einer bolzenartigen Anzeige zur Vorspannkraft.

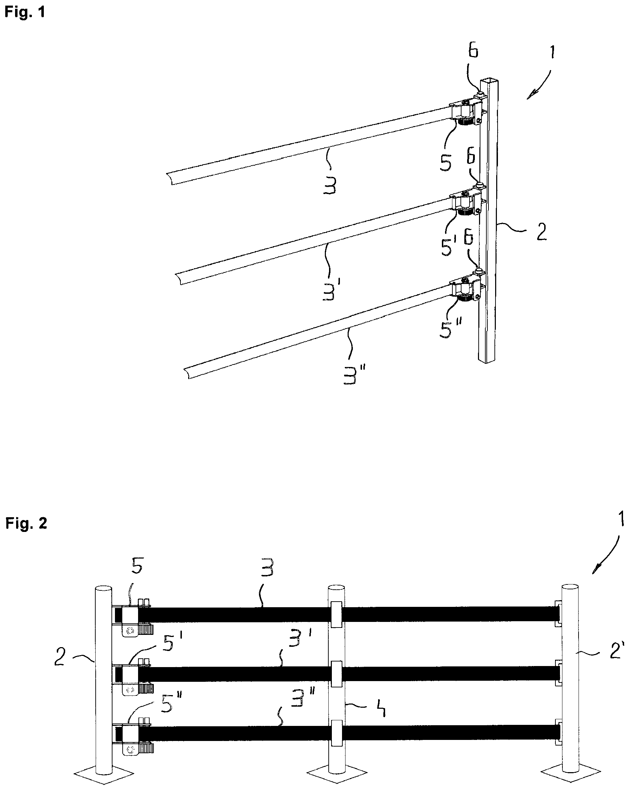

Gemäß **Fig. 1** und **Fig. 2** setzt sich die Vorrichtung zur Höhensicherung **1** aus zwei vertikalen Stützelementen **2, 2'**, drei textilen, biegeschlaffen Anschlagmitteln **3, 3'**, **3"**, die an den zwei Stützelementen im Funktionszustand - somit im montierten Zustand - angeordnet sind und des Weiteren einem weiteren vertikalen Stützelement **4** zusammen, wobei die drei textilen, biegeschlaffen Anschlagmittel **3, 3'**, **3'**' an dem weiteren vertikalen Stützelement **4** im Funktionszustand ebenfalls sicher angeordnet sind, was jeweils über Bandführungen zur Aufnahme der drei biegeschlaffen Anschlagmittel erfolgt. Das Ausführungsbeispiel zeigt in den **Fig. 1** und **Fig. 2** einen montierten Zustand.

Die beiden vertikalen Stützelemente **2, 2'** und das eine weitere vertikale Stützelement **4** verfügen im funktionsfähigen Zustand der Vorrichtung **1** über eine Basis zur Anordnung auf eine Oberfläche einer Körperstruktur, im Ausführungsbeispiel eine Betondecke eines Bauwerks. Die jeweilige Basis ist auf der Körperstruktur mittels Schraubverbindungen sicher montiert.

Ferner weist die Vorrichtung zur Höhensicherung **1** drei Spannvorrichtungen **5, 5**', **5"** auf, die mit dem jeweiligen textilen, biegeschlaffen Anschlagmittel **3, 3'**, **3'**' in Wirkverbindung stehen und zum funktionssicheren Spannen der drei biegeschlaffen Anschlagmittel **3, 3'**, **3'**' dienen.

Erfindungsgemäß sind die Spannvorrichtungen **5, 5**', **5"** jeweils an dem einen vertikalen Stützelement **2** beweglich und reversibel über eine Gelenkverbindung **6** angeordnet. Die Spannvorrichtungen **5, 5**', **5"** können über die Gelenkverbindungen **6** in Zugrichtung ausgerichtet werden, wenn die textilen, biegeschlaffen Anschlagmittel **3, 3'**, **3"** gespannt werden, was wegen der bereits erfolgten einseitigen Anordnung für eine Bedienperson leicht vorgenommen werden kann. Sie sind leicht von dem vertikalen Stützelement **2** demontierbar und können so ersetzt oder separat transportiert werden.

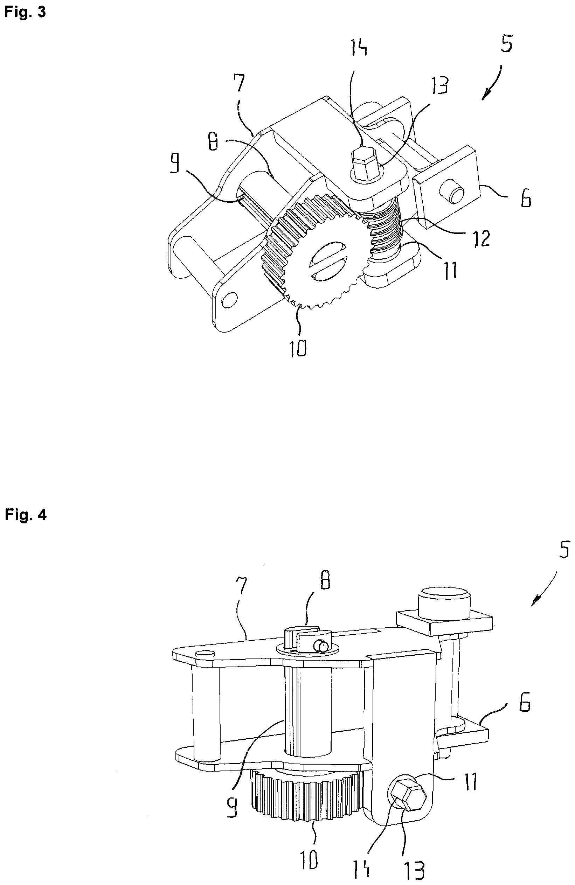

**Fig. 3** und **Fig. 4** stellen eine erfindungsgemäße Spannvorrichtung **5** dar. Diese besitzt ein Grundgestell **7** mit einer darin drehbar gelagerten Aufwickelwelle **8,** auf die das jeweilige biegeschaffe, textile Anschlagmittel **3, 3'**, **3'**' aufwickelbar ist, wobei die Aufwickelwelle **8** ein Fixierungselement **9,** im Ausführungsbeispiel einen Aufnahmeschlitz, zur Arretierung eines freien Endes **13** des jeweiligen biegeschlaffen textilen Anschlagmittels **3, 3'**, **3"** aufweist. Ebenfalls besitzt die Spannvorrichtung **5** ein Schneckenrad **10,** dessen Drehachse die Aufwickelwelle **8** ist und das im Ausführungsbeispiel seitlich an der Aufwickelwelle **8** an dieser angeordnet ist sowie eine ebenfalls im Grundgestell **7** drehbar gelagerte Antriebswelle **11,** welche eine Schnecke **12** aufweist, die sich wiederum in Eingriff mit dem Schneckenrad **10** befindet.

Ein freies Ende **13** der Antriebswelle **11** weist erfindungsgemäß ein Anschlussstück **14** auf. Das Anschlussstück **14** ist im Ausführungsbeispiel an nur einem freien Ende **13** der Antriebswelle **11** vorgesehen.

Das Anschlussstück **14** ist dabei als ein Formteil, so als Sechskant, ausgestaltet, das es ermöglicht, die Antriebswelle **11** über das Anschlussstück **14,** das in Formschluss mit einem Gegenstück bringbar ist, über eine Antriebseinheit, im Ausführungsbeispiel eine Akkubohrmaschine, anzutreiben, um so einen Spannvorgang der jeweiligen biegeschlaffen Anschlagmittel **3, 3'**, **3'**' durchzuführen.

Dadurch ist eine weiter optimierte Handhabe der Vorrichtung zur Höhensicherung gegeben. So kann der Spannvorgang feiner erfolgen als bei bekannten Ratschen. Ein Aufbringen und ein Nachjustieren der Vorspannkraft können punktgenau erfolgen. Durch die Ausgestaltung des Anschlussstücks **14** als Formteil und des formschlüssigen Zusammenwirkens mit dem Gegenstück wird zudem gewährleistet, dass nur Inhaber des Gegenstücks die Spannvorrichtung **5** bedienen können.

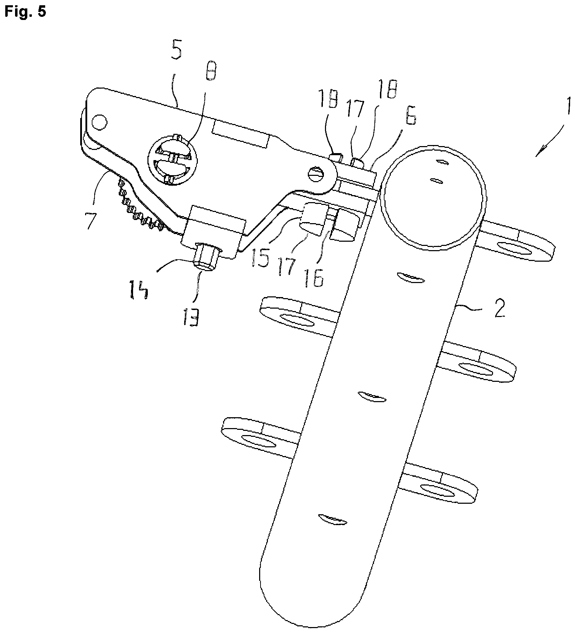

In **Fig. 5** ist eine bestimmte Art der Gelenkverbindung **6** zwischen einer Anzeige der Vorspannkraft **15** und dem mindestens einen vertikalen Stützelement **2** dargestellt. Dabei ist vorgesehen,
dass die Anzeige der Vorspannkraft **15** Teil der Gelenkverbindung **6** ist. Die Anzeige der Vorspannkraft **15** ist bolzenartig ausgebildet und bildet eine Drehachse der Gelenkverbindung **6.**

Dadurch ist die Anzeige der Vorspannkraft **15** in die Gelenkverbindung **6** zwischen der Spannvorrichtung **5** und dem mindestens einen vertikalen Stützelement **2** integriert. Dabei ist die Anzeige der Vorspannkraft **15** so ausgebildet, dass eine Ausnehmung **16,** im Ausführungsbeispiel ein Schlitz, rechtwinklig zur Wirkrichtung der Vorspannkraft vorgesehen ist. Die Ausnehmung **16** verringert sich während des Spannvorgangs, maximal bis null, bis beide Teilelemente der Anzeige der Vorspannkraft **15** zusammenstoßen. Die Anzeige der Vorspannkraft **15** ist im Ausführungsbeispiel ein mehrstückiger Bolzen, beispielhaft aus Aluminium, bestehend aus zwei miteinander korrespondierenden Schalenhälften **18,** die durch ein Federelement, zum Beispiel aus Kunststoff oder einem anderen geeignetem Material, das zwischen beiden Schalenhälften **18** gelegen ist und einen definierten bei Druckbeaufschlagung verringerbaren Abstand der beiden Schalenhälften **18** gewährt, miteinander in Wirkverbindung stehen. Die Ausnehmung **16** erstreckt sich axial. Sie ist an zwei Stirnseiten **17** der Anzeige der Vorspannkraft **15** sichtbar.

### Bezugszeichenliste:

1. Vorrichtung zur Höhensicherung
2. vertikales Stützelement
3. Anschlagmittel
4. weiteres vertikales Stützelement
5. Spannvorrichtung
6. Gelenkverbindung
7. Grundgestell
8. Aufwickelwelle
9. Fixierungselement
10. Schneckenrad
11. Antriebswelle
12. Schnecke
13. freies Ende
14. Anschlussstück
15. Anzeige der Vorspannkraft
16. Ausnehmung
17. Stirnseiten
18. Schalenhälften

## Patentansprüche

1. Vorrichtung zur Höhensicherung (1), bestehend aus
- mindestens einem vertikalen Stützelement (2),
- mindestens einem textilen, biegeschlaffen Anschlagmittel (3), das an dem mindestens einen vertikalen Stützelement (2) im Funktionszustand angeordnet ist,
- mindestens einem Anschlagpunkt, der im Funktionszustand an eine Körperstruktur angeordnet ist oder mindestens einem weiteren vertikalen Stützelement (4), wobei das mindestens eine textile biegeschlaffe Anschlagmittel (3) an dem mindestens einen Anschlagpunkt oder an dem mindestens einen weiteren vertikalen Stützelement (4) im Funktionszustand angeordnet ist,
- einer Spannvorrichtung (5), die mit dem mindestens einen textilen, biegeschlaffen Anschlagmittel (3) im Funktionszustand in Wirkverbindung steht und zum Spannen des mindestens einen biegeschlaffen Anschlagmittels (3) dient, wobei die Spannvorrichtung (5) an dem mindestens einen vertikalen Stützelement (2) und/oder dem mindestens einen weiteren vertikalen Stützelement (4) und/oder dem mindestens einen Anschlagpunkt beweglich angeordnet ist.

2. Vorrichtung zur Höhensicherung (1) nach Anspruch 1, wobei die Spannvorrichtung (5) mittels einer Gelenkverbindung (6) an dem mindestens einen vertikalen Stützelement (2) und/oder dem mindestens einen weiteren vertikalen Stützelement (4) und/oder dem mindestens einen Anschlagpunkt beweglich und reversibel angeordnet ist.

3. Vorrichtung zur Höhensicherung (1) nach Anspruch 2, wobei die Gelenkverbindung (6) ein Bügel ist, der drehbar an der Spannvorrichtung (5) angeordnet ist und eine X-Achse der Gelenkverbindung (6) bildet und der Bügel eine Aufnahme aufweist, die winklig, vorzugsweise rechtwinklig zur X-Achse an dem mindestens einen vertikalen Stützelement (2) und/oder dem mindestens einen weiteren Stützelement (4) und/oder dem mindestens einen Anschlagpunkt drehbar angeordnet ist und eine Y-Achse der Gelenkverbindung bildet.

4. Vorrichtung zur Höhensicherung (1) nach einem der vorherigen Ansprüche, wobei
- die Spannvorrichtung (5) ein Grundgestell (7) mit einer darin drehbar gelagerten Aufwickelwelle (8) enthält, auf die das mindestens eine Anschlagmittel (3) aufwickelbar ist, wobei die Aufwickelwelle (8) ein Fixierungselement (9) zur Arretierung eines freien Endes des mindestens einen Anschlagmittels (3) aufweist, ein Schneckenrad (10) vorgesehen ist, dessen Drehachse die Aufwickelwelle (8) ist und das an der Aufwickelwelle (8) angeordnet ist sowie eine ebenfalls im Grundgestell (7) drehbar gelagerte Antriebswelle (11), eine Schnecke (12) aufweisend, welche sich in Eingriff mit dem Schneckenrad (10) befindet,
- mindestens ein freies Ende (13) der Antriebswelle (11) ein Anschlussstück (14) aufweist,
- das Anschlussstück (14) ein Formteil ist, das es ermöglicht, die Antriebswelle (11) über das Anschlussstück (14), das in Formschluss mit einem Gegenstück bringbar ist, über eine Antriebseinheit anzutreiben, um so einen Spannvorgang des mindestens einen biegeschlaffen Anschlagmittels (3) durchzuführen.

5. Vorrichtung zur Höhensicherung (1) nach Anspruch 4, wobei das Anschlussstück (14) ein Formteil mit mindestens einem Sicherheitsmerkmal ist, in das lediglich ein passendes Gegenstück in Wirkverbindung bringbar ist.

6. Vorrichtung zur Höhensicherung (1) nach einem der vorherigen Ansprüche 4 oder 5, wobei das Anschlussstück (14) und/oder die Antriebswelle (11) eine Sollbruchstelle aufweisen.

7. Vorrichtung zur Höhensicherung (1) nach einem der vorherigen Ansprüche 4 bis 6, wobei das Anschlussstück (14) und/oder die Antriebswelle (11) ein Kardangelenk aufweisen.

8. Vorrichtung zur Höhensicherung (1) nach einem der vorherigen Ansprüche 4 bis 7, wobei das Anschlussstück (14) und/oder die Antriebswelle (11) eine Rutschkupplung aufweisen.

9. Vorrichtung zur Höhensicherung (1) nach einem der vorherigen Ansprüche, wobei die Vorrichtung zur Höhensicherung (1) eine Anzeige der Vorspannkraft (15) aufweist und die Anzeige der Vorspannkraft (15) an dem mindestens einen biegeschlaffen Anschlagmittel (3) an der Spannvorrichtung (5) und/oder an der Gelenkverbindung (6) der Spannvorrichtung (5) angeordnet ist.

10. Vorrichtung zur Höhensicherung (1) nach Anspruch 9, wobei die Anzeige der Vorspannkraft (15) Teil der Gelenkverbindung (6) ist, bolzenartig ausgebildet ist und eine Drehachse der Gelenkverbindung (6) bildet, die Anzeige eine Ausnehmung (16) aufweist, zum Beispiel einen Schlitz, die rechtwinklig zur Richtung der Vorspannkraft vorgesehen ist und die Ausnehmung (16) sich während des Spannvorgangs maximal bis 0 verringern kann.

11. Vorrichtung zur Höhensicherung (1) nach Anspruch 10, wobei die Ausnehmung (16) in Längsrichtung angeordnet ist, sich somit axial erstreckt und an einer oder an zwei Stirnseiten (17) der Anzeige der Vorspannkraft (15) sichtbar ist.

12. Vorrichtung zur Höhensicherung (1) nach einem der Ansprüche 10 oder 11, wobei die Anzeige der Vorspannkraft (15) ein mehrstückiger Bolzen ist, bestehend aus zwei miteinander korrespondierenden Schalenhälften (18), die durch ein Federelement, das zwischen beiden Schalenhälften (18) gelegen ist und einen definierten bei Druckbeaufschlagung verringerbaren Abstand der beiden Schalenhälften (18) gewährt, miteinander in Wirkverbindung stehen.

13. Spannvorrichtung (5) für eine Vorrichtung zur Höhensicherung (1) mit mindestens einem biegeschlaffen Anschlagmittel (3), wobei
- die Spannvorrichtung (5) ein Grundgestell (7) mit einer darin drehbar gelagerten Aufwickelwelle (8) enthält, auf die das mindestens eine biegeschlaffe Anschlagmittel (3) aufwickelbar ist, wobei die Aufwickelwelle (8) ein Fixierungselement (9) zur Arretierung eines freien Endes des mindestens einen Anschlagmittels (3) aufweist, ein Schneckenrad (10) vorgesehen ist, dessen Drehachse die Aufwickelwelle (8) ist und das an der Aufwickelwelle (8) angeordnet ist sowie eine ebenfalls im Grundgestell (7) drehbar gelagerte Antriebswelle (11), eine Schnecke (12) aufweisend, welche sich in Eingriff mit dem Schneckenrad (10) befindet,
- mindestens ein freies Ende (13) der Antriebswelle (11) ein Anschlussstück (14) aufweist,
- das Anschlussstück (14) ein Formteil ist, das es ermöglicht, die Antriebswelle (11) über das Anschlussstück (14), das in Formschluss mit einem Gegenstück bringbar ist, über eine Antriebseinheit anzutreiben, um so einen Spannvorgang des mindestens einen biegeschlaffen Anschlagmittels (3) der Vorrichtung zur Höhensicherung (1) durchzuführen.

14. Spannvorrichtung (5) nach Anspruch 13, wobei die Spannvorrichtung (5) an dem mindestens einen vertikalen Stützelement (2) und/oder dem mindestens einen weiteren vertikalen Stützelement (4) und/oder dem mindestens einen Anschlagpunkt beweglich anordenbar ist.

15. Spannvorrichtung (5) nach einem der Ansprüche 13 oder 14, wobei das Anschlussstück (14) ein Formteil mit mindestens einem Sicherheitsmerkmal ist, in das lediglich ein passendes Gegenstück in Wirkverbindung bringbar ist.

16. Spannvorrichtung (5) nach einem der Ansprüche 13 bis 15, wobei das Anschlussstück (14) und/oder die Antriebswelle (11) ein Kardangelenk aufweisen.

17. Spannvorrichtung (5) nach einem der Ansprüche 13 bis 16, wobei das Anschlussstück (14) und/oder die Antriebswelle (11) eine Rutschkupplung aufweisen.
